(19)

Europäisches Patentamt

European Patent Office

Office européen des brevets

(11) **EP 4 492 602 A1**

(12) **EUROPEAN PATENT APPLICATION**
published in accordance with Art. 153(4) EPC

(43) Date of publication:
**15.01.2025 Bulletin 2025/03**

(21) Application number: **23822696.3**

(22) Date of filing: **09.03.2023**

(51) International Patent Classification (IPC):
***H02H 9/02*** (2006.01)

(52) Cooperative Patent Classification (CPC):
**H02H 9/02; H05B 45/30; H05B 45/59; H05B 47/25**

(86) International application number:
**PCT/CN2023/080467**

(87) International publication number:
**WO 2023/241124 (21.12.2023 Gazette 2023/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.06.2022 CN 202210664617**

(71) Applicant: **CRM ICBG (WUXI) CO., LTD.
Wuxi, Jiangsu 214135 (CN)**

(72) Inventors:
- LIU, Jun
  **Wuxi, Jiangsu 214135 (CN)**
- LI, Guocheng
  **Wuxi, Jiangsu 214135 (CN)**
- WU, Quanqing
  **Wuxi, Jiangsu 214135 (CN)**

(74) Representative: **Canzler & Bergmeier
Patentanwälte
Partnerschaft mbB
Despag-Straße 6
85055 Ingolstadt (DE)**

(54) **JUMP EDGE DETECTION MODULE, BLEED CONTROL CIRCUIT, METHOD AND LED DRIVE SYSTEM**

(57) Provided in the present invention are a jump edge detection module, a bleed control circuit, a method and an LED drive system. The bleed control circuit comprises: a current control module which controls a bleed current, and when a current flowing through an LED constant-current control circuit is greater than a first preset value, outputs a first bleed turn-off signal; a bleed voltage amplitude measurement module for measuring an amplitude of a bleed voltage; a jump edge detection module for detecting a jump edge of the bleed voltage; a first logic module, which outputs a second bleed turn-off signal when the duration of the bleed voltage amplitude being greater than the second preset value exceeds a set value, and which resets the second bleed turn-off signal when the bleed voltage jumps; and a second logic module which outputs a turn-off control signal when the first or second bleed turn-off signal is valid. The present invention can simplify the system design, reduce the chip area, and reduce the external capacitance, and has strong anti-interference capability.

FIG. 3

**Description**

**CROSS-REFERENCE TO RELATED APPLICATIONS**

This application claims priority to Chinese patent application No. 202210664617.8, filed with the Chinese Patent Office on June 13, 2022, and entitled "Jump edge detection module, bleed control circuit, method, and LED drive system", the entire contents of which are incorporated herein by reference.

**FIELD OF TECHNOLOGY**

The present disclosure relates to the field of integrated circuit design and, in particular, to a jump edge detection module, bleed control circuit, method, and LED drive system.

**BACKGROUND**

When using a thyristor for dimming control in LED drivers, there is a certain requirement for the holding current of the conduction of the thyristor. If the input current falls below the holding current, the thyristor will turn off and then restart, causing the LED to flicker. Therefore, an additional Bleed circuit is generally needed to meet the holding current requirement of the thyristor, ensuring that the thyristor remains conducting within the working range to avoid LED flickering. In linear LED drivers, especially when the LED voltage is relatively high, adding a bleed current is necessary to ensure reliable conduction of the thyristor when the input voltage is below the LED voltage. However, the Bleed current can result in significant losses. Additionally, the Bleed current is not required when the thyristor is not connected in the system.

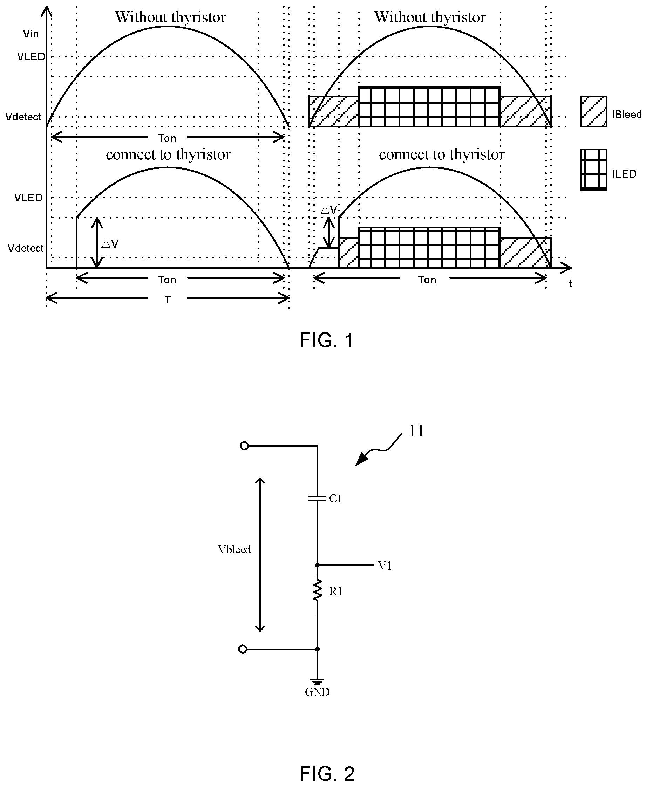

Typically, when the thyristor is connected to the system, a portion of the input voltage Vin will be cut off, and the conduction time Ton will be less than the period time T. Whether to connect the thyristor can be determined by checking if the activation duration of the input voltage $V_{detect}$ meets the requirements, and then deciding whether to add the Bleed current $I_{Bleed}$, as shown in the left half of FIG. 1. However, in some application scenarios, the thyristor needs to delay its activation, causing a period during which the thyristor is turned off and the bus voltage (i.e., input voltage Vin) is relatively high. In such cases, using the method of checking the input voltage to determine whether to connect the thyristor may not be suitable, as shown in the right half of FIG. 1. To address this issue, it is possible to conduct the Bleed current for a maximum period of time and detect the conduction time of the Bleed current. Since the conduction time of the Bleed current will be shortened after connecting the thyristor, if the detected conduction time of the Bleed current exceeds a set value, it can be determined that the thyristor is not connected and the Bleed current should be turned off.

The above approach requires the system to be stable before detecting the time of the relevant parameters, and the input alternating current voltage is a low-frequency industrial frequency signal, so it needs a large capacitor filtering or timing circuits for judgment, leading to a significant increase in chip area. Moreover, once the input frequency of the power grid fluctuates, the period of the AC voltage will also change, thus affecting the accuracy of the timing.

Therefore, how to reduce loss and device area, and improve accuracy while ensuring reliable thyristor conduction has become one of the urgent problems for those skilled in the art.

**SUMMARY**

In view of the above-mentioned shortcomings of the prior art, the purpose of the present disclosure is to provide a jump edge detection module, a bleed control circuit, a bleed current control method and an LED drive system, which are used to solve the problems of large circuit loss caused by the bleed current, large area of the bleed control circuit, high cost, low accuracy and the like in the prior art.

The present disclosure provides a jump edge detection module, which includes at least:

A first capacitor and a first resistor; a first end of the first capacitor is connected to a voltage to be measured, and a second end of the first capacitor is connected to a first end of the first resistor; a second end of the first resistor is grounded; a connection node between the first capacitor and the first resistor is configured to output a jump edge detection signal of the voltage to be measured.

Optionally, the voltage to be measured is a bleed voltage or a sampling voltage of the bleed voltage.

The present disclosure also provides a bleed control circuit for maintaining thyristor conduction, the bleed control circuit includes at least a current control module, a bleed voltage amplitude measurement module, a first logic module, a second logic module, and a jump edge detection module.

One end of the current control module is connected to a positive electrode of an input voltage, and the other end of the current control module is connected to a negative electrode of the input voltage, for controlling a bleed current and outputting a first bleed turn-off signal when the current flowing through an LED constant current control circuit is greater than a first preset value.

The bleed voltage amplitude measurement module is configured to detect an amplitude of the bleed voltage, and the jump edge detection module is configured to detect a jump edge of the bleed voltage.

The first logic module is connected to an output terminal of the bleed voltage amplitude measurement module and an output terminal of the jump edge detection module. When the amplitude of the bleed voltage is greater than a second preset value for a duration longer than a set value, it is determined that the thyristor is not connected and a second bleed turn-off signal is output. When the bleed voltage jumps, it is determined that the thyristor is connected and the second bleed turn-off signal should be reset.

The second logic module is connected to an output terminal of the current control module and an output terminal of the first logic module, to output a shutdown control signal when the first bleed turn-off signal or the second bleed turn-off signal is valid, and to provide the shutdown control signal to the current control module to shut down the bleed current.

Optionally, the current control module includes a power switch, a second resistor, a third resistor, a fourth resistor, a voltage conversion unit, a first comparator, a constant current source, and a first operational amplifier.

A first end of the power switch is connected to the positive electrode of the input voltage and a second end of the power switch is connected to the negative electrode of the input voltage via the second resistor.

A first end of the third resistor is connected to a ground terminal of the LED constant current control circuit and a second end of the third resistor is connected to the negative electrode of the input voltage.

An input terminal of the voltage conversion unit is connected to the second end of the third resistor, to convert the negative voltage at the second end of the third resistor into a positive voltage.

A first input terminal of the first comparator is connected to an output terminal of the voltage conversion unit, a second input terminal of the first comparator is configured to receive a first reference voltage, and the first comparator is configured to output the first bleed turn-off signal.

An input terminal of the constant current source is connected to an output terminal of the voltage conversion unit, and an output terminal of the constant current source is connected to the first input terminal of the first operational amplifier.

One end of the fourth resistor is connected to an output terminal of the constant current source and the other end of the fourth resistor is connected to the second end of the power switch.

A first input terminal of the first operational amplifier is connected to an output terminal of the second logic module, and a second input terminal of the first operational amplifier is configured to receive a second reference voltage, and the first operational amplifier is configured to drive the power switch to adjust the bleed current based on a difference between an output voltage of the constant current source and the second reference voltage, and turns off the power switch based on the shutdown control signal.

More optionally, the voltage conversion unit includes a fifth resistor, a sixth resistor, a first diode and a second operational amplifier.

The fifth resistor and the sixth resistor are connected in series between the input terminal and the output terminal of the voltage conversion unit.

The cathode of the first diode is connected to the input terminal of the voltage conversion unit and the anode is connected to the ground terminal of the LED constant current control circuit.

A first input terminal of the second operational amplifier is connected between the fifth resistor and the sixth resistor, a second input terminal is connected to the anode of the first diode, and an output is connected to the output terminal of the voltage conversion unit.

More optionally, the operating voltage on the third resistor is less than the forward conduction voltage of the first diode.

Optionally, the bleed control circuit further includes a second diode. The second diode is connected between an output terminal of the second logic module and an input terminal of the current control module, for isolating an invalid shutdown control signal.

More optionally, the bleed voltage amplitude measurement module includes a seventh resistor, an eighth resistor and a ninth resistor. The seventh resistor, the eighth resistor, and the ninth resistor are sequentially connected in series between both ends of the bleed voltage. A connection node of the eighth resistor and the ninth resistor is configured to output an amplitude detection signal.

More optionally, the first end of the first capacitor in the jump edge detection module is connected to a connection node of the seventh resistor and the eighth resistor.

More optionally, the first logic module includes a second comparator, a third comparator and a counting unit.

A first input terminal of the second comparator is connected to an output terminal of the bleed voltage amplitude measurement module, and a second input terminal of the second comparator is configured to receive a third reference voltage. The second comparator outputs a clock signal when the bleed voltage is greater than a second preset value.

A first input terminal of the third comparator is connected to an output terminal of the jump edge detection module, and a second input terminal of the third comparator is configured to receive a fourth reference voltage. The third comparator outputs a reset signal when a jump voltage of the bleed voltage is greater than a third preset value.

The counting unit is connected to an output terminal of the second comparator and an output terminal of the third comparator. The counting unit performs counting based on the clock signal and outputs the second bleed turn-off signal when a count value reaches a set value, and resets the second bleed turn-off signal based on the reset signal.

The present disclosure provides a LED drive system with thyristor dimming, which includes at least a voltage input circuit, an LED constant current control circuit, and a bleed control circuit.

The voltage input circuit is configured to receive an AC voltage and convert the AC voltage to an input voltage of DC.

The LED constant current control circuit is connected to an output terminal of the voltage input circuit to achieve a constant current output of an LED based on the input voltage.

The bleed control circuit is connected to the output terminal of the voltage input circuit, to provide a bleed current to maintain the conduction of the voltage input circuit, and to turn off the bleed current in accordance with the current flowing through the LED constant current control circuit and a connection state of the thyristor.

Optionally, the voltage input circuit includes a rectifier unit and a thyristor. An AC terminal of the rectifier unit is connected to the AC voltage, and a DC terminal of the rectifier unit is configured to output the input voltage. The thyristor is connected in series to the AC terminal of the rectifier unit.

More optionally, the LED constant current control circuit includes a third diode, a first LED load, a second capacitor and a constant current control unit.

An anode of the third diode is connected to the input voltage, and a cathode of the third diode is connected to a positive electrode of the first LED load. The second capacitor is connected in parallel to both ends of the first LED load.

The constant current control unit is connected to a negative electrode of the first LED load, and performs constant current control on the current flowing through the first LED load.

More optionally, the LED constant current control circuit includes a fourth diode, a second LED load, a third capacitor and a current control unit.

An anode of the fourth diode is connected to the input voltage, and a cathode of the fourth diode is connected to an upper plate of the third capacitor, and a positive electrode of the second LED load.

The current control unit is connected to a lower plate of the third capacitor and a negative electrode of the second LED load, to control the charging current of the third capacitor and the current flowing through the second LED load respectively, so as to realize the constant current and strobe-free control of the second LED load.

The present disclosure provides a bleed current control method, based on the bleed control circuit mentioned above, the bleed current control method includes at least:

powering up and generating a bleed current;

detecting a bleed voltage, determining whether a thyristor is connected based on the bleed voltage, outputting a second bleed turn-off signal when the thyristor is not connected, and resetting the second bleed turn-off signal when the thyristor is connected;

if the thyristor is connected, sampling the current flowing through the LED constant current control circuit; and when the current flowing through the LED constant current control circuit is greater than a first preset value, outputting a first bleed turn-off signal;

outputting a shutdown control signal to shut down the bleed current when the first bleed turn-off signal or the second bleed turn-off signal is valid.

Optionally, a method of generating the second bleed turn-off signal includes: detecting the bleed voltage, starting counting when the bleed voltage is greater than a second preset value, and outputting the second bleed turn-off signal when a count value reaches a set value.

Optionally, a method of resetting the second bleed turn-off signal includes: detecting the bleed voltage, generating a jump voltage from the bleed voltage when the thyristor conducts, and resetting the second bleed turn-off signal when the jump voltage is greater than a third preset value.

As mentioned above, the jump edge detection module, the bleed control circuit, the bleed current control method, and the LED drive system of the present disclosure have the following beneficial effects:

1. The jump edge detection module of the present disclosure has a very small capacitance capacity for detecting jumps, and can be integrated with resistors into the chip, simplifying system design.

2. The bleed control circuit, the method and the LED drive system of the present disclosure utilize the periodic signal generated by the input AC voltage itself as the clock signal, and generates the bleed turn-off signal by counting, and no longer requires filtering and timing of the industrial frequency signal, which can significantly reduce the chip area and external capacitance.

3. The bleed control circuit, the method and LED driver system of the present disclosure use the jump in input voltage when the thyristor conducts to generate a reset signal, making it unable to output the bleed turn-off signal when the count value is cleared to zero, so as to determine the connection state of the thyristor, thus further reducing the chip area.

4. The bleed control circuit, the method and LED drive system of the present disclosure require continuous counting to cut off the bleed current, so even if occasional interference occurs when no thyristor is connected, it will not result in detection errors, maintaining a stable state of cutting off the bleed current with strong anti-interference capability.

## BRIEF DESCRIPTION OF THE DRAWINGS

FIG. 1 shows a schematic view of voltage and current with or without a thyristor.
FIG. 2 is a schematic view of a jump edge detection module according to the present disclosure.
FIG. 3 is a schematic view of a bleed control circuit according to the present disclosure.
FIG. 4 is a schematic flowchart of a method for controlling a bleed current according to the present disclosure.
FIG. 5 is a schematic view of a LED drive system with thyristor dimming of the present disclosure.
FIG. 6 is another schematic view of a LED drive system with thyristor dimming according to the present disclosure.

Description of Reference Numerals

| | |
|---|---|
| 1 | Bleed control circuit |
| 11 | Jump edge detection module |
| 12 | Current control module |
| 121 | Voltage conversion unit |
| 13 | Bleed voltage amplitude measurement module |
| 14 | First logic module |
| 141 | Counting unit |
| 15 | Second logic module |
| 2 | Voltage input circuit |
| 21 | Rectifier unit |
| 22 | Thyristor (Silicon controlled rectifier) |
| 3 | LED constant current control circuit |
| 31 | Constant current control unit |
| 32 | Current control unit |
| 33 | Working voltage generation module |

## DETAILED DESCRIPTION

The embodiments of the present disclosure will be described below. Those skilled in the art can easily understand other advantages and effects of the present disclosure according to contents disclosed by the specification. The present disclosure may also be implemented or applied through other different specific implementation modes. Various modifications or changes may be made to all details in the specification based on different points of view and applications without departing from the spirit of the present disclosure.

Referring to FIGs. 2-6. It needs to be stated that the drawings provided in the following embodiments are just used for schematically describing the basic concept of the present disclosure, thus only illustrating components only related to the present disclosure and are not drawn according to the numbers, shapes and sizes of components during actual implementation, the configuration, number and scale of each component during actual implementation thereof may be freely changed, and the component layout configuration thereof may be more complicated.

## Embodiment 1

As shown in FIG. 2, this embodiment provides a jump edge detection module 11, the jump edge detection module 11 including: a first capacitor C1 and a first resistor R1. The first capacitor C1 has a first end connected to the voltage to be measured and a second end connected to a first end of the first resistor R1, A second end of the first resistor R1 is grounded. A connection node of the first capacitor C1 with the first resistor R1 is configured to output a jump edge detection signal V1 of the voltage to be measured.

Specifically, in this embodiment, the voltage to be measured is a bleed voltage $V_{bleed}$ or a sampling voltage of the bleed voltage $V_{bleed}$ used to maintain normal operation of the thyristor in the LED drive system. When the thyristor conducts, the jump voltage of the bleed voltage changes very fast, and the first capacitor C1 only needs a small capacity to detect the jump signal, so the first capacitor C1 and the first resistor R1 can be integrated together inside the chip, thereby simplifying the system design.

It should be noted that in practical use, the jump edge detection module 11 can set a first capacitor of a corresponding size according to the required jump edge speed based on the voltage to be measured (for example, the size of the first capacitor is limited to be able to be integrated into the chip), thereby achieving jump edge detection of any signal, which is not limited to this embodiment.

## Embodiment 2

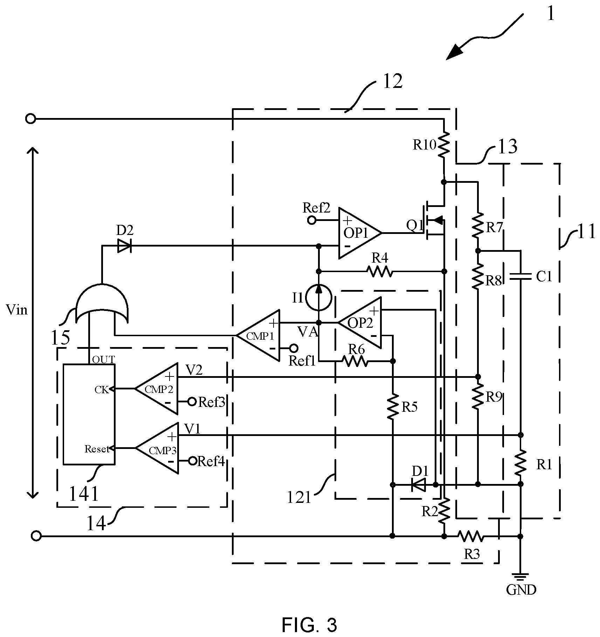

As shown in FIG. 3, this embodiment provides a bleed control circuit 1, which is used to maintain the thyristor conduction. The bleed control circuit 1 includes: a jump edge detection module 11, a current control module 12, a bleed voltage amplitude measurement module 13, a first logic module 14, and a second logic module 15.

As shown in FIG. 3, one end of the current control module 12 is connected to the positive electrode of the input voltage Vin and the other end of the current control module 12 is connected to the negative electrode of the input voltage Vin, for controlling the bleed current and outputting a first bleed turn-off signal when the current flowing through the LED constant current control circuit (not shown in FIG. 3) is greater than a first preset value.

Specifically, the current control module 12 is used to generate a bleed current, the magnitude of which is set according to the conduction demand of the thyristor. When the current flowing through the LED constant current control circuit is greater than a first preset value, the current is considered to be greater than the conduction current of the thyristor, and at this time, the current flowing through the LED constant current control circuit is sufficient to maintain normal operation of the thyristor, and thus the first bleed turn-off signal is generated to reduce the loss. The current flowing through the LED constant current control circuit includes, but is not limited to, the output current of the LED and the charging and discharging currents of the capacitor, and any current flowing from the positive electrode of the input voltage Vin and flowing into the ground terminal of the LED constant current control circuit is covered, which will not be repeated herein. In this embodiment, the current control module 12 includes: a power switch Q1, a second resistor R2, a third resistor R3, a fourth resistor R4, a voltage conversion unit 121, a first comparator CMP1, a constant current source I1 and a first operational amplifier OP1.

More specifically, a first end of the power switch Q1 is connected to the positive electrode of the input voltage Vin, and a second end of the power switch Q1 is connected to the negative electrode of the input voltage Vin via the second resistor R2. In this embodiment, the first end of the power switch Q1 is connected to the positive electrode of the input voltage Vin through a tenth resistor R10. By controlling the conduction and shutdown of the power switch Q1, the current flowing through the power switch Q1 is adjusted, thereby realizing the control of the bleed current. The bleed current is used to maintain the thyristor conduction when the input current is less than the thyristor conduction current, thus avoiding flickering of the LED. In this embodiment, the power switch Q1 is a MOS tube, in which case the first end of the power switch Q1 is the drain, the second end is the source, and the control end is the gate. In practice, the type of the power switch Q1 can be set as required, and the ends can be adaptively adjusted.

More specifically, the first end of the third resistor R3 is connected to the ground terminal GND of the LED constant current control circuit, and the second end of the third resistor R3 is connected to the negative electrode of the input voltage Vin. The third resistor R3 obtains the current flowing through the LED constant current control circuit from the ground terminal GND of the LED constant current control circuit, and the third resistor R3 receives a negative voltage, noted as -Vs.

More specifically, the input terminal of the voltage conversion unit 121 is connected to the second end of the third resistor R3 to convert the negative voltage at the second end of the third resistor R3 to a positive voltage. As an example, the voltage conversion unit 121 includes a fifth resistor R5, a sixth resistor R6, a first diode D1 and a second operational amplifier OP2. The fifth resistor R5 and the sixth resistor R6 are connected in series between the input terminal and the output terminal of the voltage conversion unit 121. The cathode of the first diode D1 is connected to the input terminal of the voltage conversion unit 121 (i.e., the negative electrode of the input voltage Vin), and the anode of the first diode D1 is connected to the ground terminal GND of the LED constant current control circuit (i.e., the first terminal of the third resistor R3). The second operational amplifier OP2 has a first input terminal connected between the fifth resistor R5 and the sixth resistor R6, a second input terminal connected to the anode of the first diode D1 and an output terminal connected to the output terminal of the voltage conversion unit 121. In this embodiment, the inverting input terminal of the second operational amplifier OP2 is connected between the fifth resistor R5 and the sixth resistor R6, and the non-inverting input terminal of the second operational amplifier OP2 is connected to the anode of the first diode D1, and the relationship between the input signals and the polarity of the corresponding input terminals can be adjusted by an inverter in actual use, without being limited by the present embodiment. In this embodiment, the resistance values of the fifth resistor R5 and the sixth resistor R6 are equal, then the output voltage VA of the voltage conversion unit 121 is equal to Vs. In actual use, the resistance values of the fifth resistor R5 and the sixth resistor R6 may not be equal, at which time, the output voltage VA of the voltage conversion unit 121 has a certain proportional relationship with the absolute value Vs of the voltage on the third resistor R3, which will not be discussed herein. Since an excessive negative voltage will affect the operation of the bleed control circuit 1, the internal circuit is clamped and protected by the first diode D1 by setting the operating voltage on the third resistor R3 to be less than the forward conduction voltage of the first diode D1. As an example, when the bleed control circuit 1 is integrated within the chip, the first diode D1 can be realized using a parasitic diode of a chip interface ESD protection device. The first diode D1 may also be an independently configured device, which is not limited by this embodiment.

More specifically, a first input terminal of the first comparator CMP1 is connected to an output terminal of the voltage conversion unit 121, and a second input terminal of the first comparator CMP1 receives a first reference voltage Ref1 and outputs the first bleed turn-off signal. As an example, the non-inverting input terminal of the first comparator CMP1 is connected to the output terminal of the voltage conversion unit 121, and the inverting input terminal of the first comparator CMP1 is connected to the first reference voltage Ref1, and the relationship between the input signals and the polarity of the corresponding input terminals can be adjusted by means of an inverter in actual use, without being limited to the present embodiment. The first comparator CMP1 compares the output voltage VA of the voltage conversion unit 121 with the first reference voltage Ref1 to determine whether the current flowing through the LED constant current control circuit reaches the first preset value (in this embodiment, the first preset value is VRef1/R3, and VRef1 is the voltage value of the first reference voltage), and if the first preset value is reached, the input current is greater than the thyristor conduction current, and there is no need to bleed the current at this time, so the power switch tube Q1 can be shut down based on the first bleed turn-off signal, thereby shutting down the bleed current and reducing power consumption. When the bleed control circuit 1 is integrated within the chip, the third resistor R3 may be provided outside the chip to facilitate the adjustment of the resistance value and thus the setting of a suitable preset value.

More specifically, the input terminal of the constant current source I1 is connected to the output terminal of the voltage conversion unit 121 and the output terminal of the constant current source I1 is connected to the first input terminal of the first operational amplifier OP1. One end of the fourth resistor R4 is connected to the output terminal of the constant current source I1 and the other end of the fourth resistor R4 is connected to the second end of the power switch Q1.

More specifically, the first input terminal of the first operational amplifier OP1 is connected to the output terminal of the second logic module 15, and the second input terminal of the first operational amplifier OP1 receives a second reference voltage Ref2, so that the first operational amplifier OP1 drives the power switch Q1 to adjust the bleed current based on the difference between the output voltage of the constant current source I1 and the second reference voltage Ref2, and turns off the power switch Q1 based on the shutdown control signal output from the second logic module 15. In this embodiment, the inverting input terminal of the first operational amplifier OP1 is connected to the output terminal of the second logic module 15, the non-inverting input terminal is connected to the second reference voltage Ref2 and the output terminal is connected to the gate of the power switch Q1. In actual use, the relationship between the input signal and the polarity of the corresponding input terminal can be adjusted by an inverter, without being limited to this embodiment.

More specifically, the output voltage VA of the voltage conversion unit 121 controls the constant current source I1 to generate a voltage of amplitude Vs across the fourth resistor R4, thereby counteracting the effect of a negative voltage across the third resistor R3 on the second end of the power switch Q1. Let I1=K1*Vs and I1*R4=Vs, thus obtaining K1 *R4=1, wherein K1 is a control coefficient determined by setting the resistance value of the fourth resistor R4, at which time, the bleed current $I_{Bleed}$ satisfies the following equation:

$$I_{Bleed} = \frac{VRef2 + Vs - K1 \cdot Vs \cdot R4}{R2} = \frac{VRef2}{R2}$$

wherein VRef2 is a voltage value of the second reference voltage. The second resistor R2 is used to adjust the magnitude of the bleed current $I_{Bleed}$, and when the bleed control circuit 1 is integrated in the chip, the second resistor R2 may be provided outside the chip to facilitate the adjustment of the bleed current $I_{Bleed}$. The second resistor R2 can also be set inside the chip to make a fixed bleed current application program, so as to reduce the number of chip pins.

It should be noted that the negative voltage detection is used in the present disclosure, and the bleed current does not affect the feedback of the LED output current, so the precision of the LED constant current is high. In addition, the negative voltage is converted to positive voltage and then involved in the circuit feedback control to avoid the problem where the system does not work. In practice, any current control module that generates a bleed current that maintains the thyristor conduction is suitable for the present disclosure and is not limited by this embodiment.

As shown in FIG. 3, the bleed voltage amplitude measurement module 13 detects the amplitude of the bleed voltage $V_{bleed}$.

Specifically, as an example, the bleed voltage amplitude measurement module 13 includes a seventh resistor R7, an eighth resistor R8 and a ninth resistor R9. The seventh resistor R7, the eighth resistor R8 and the ninth resistor R9 are connected in series, in that order, to the ends of the bleed voltage $V_{bleed}$. In this embodiment, the first end of the seventh resistor R7 is connected to the first end of the power switch Q1, the second end of the seventh resistor R7 is connected to the first end of the eighth resistor R8, the second end of the eighth resistor R8 is connected to the first end of the ninth resistor R9, and the second end of the ninth resistor R9 is connected to the ground terminal GND of the LED constant current control circuit. The ends of the bleed voltage $V_{bleed}$ may be determined in actual use according to the actual circuit structure, which is not limited to this embodiment. The connection node of the eighth resistor R8 and the ninth resistor R9 outputs the amplitude detection signal V2.

As shown in FIG. 3, the jump edge detection module 11 detects the jump edge of the bleed voltage $V_{bleed}$.

Specifically, the circuit structure of the jump edge detection module 11 is referred to Embodiment 1 and will not be repeated herein. As an example, the first end of the first capacitor C1 in the jump edge detection module 11 is connected to the connection node of the seventh resistor R7 and the eighth resistor R8, and the second end of the first resistor R1 is connected to the low-voltage end of the ninth resistor R9 (which in this embodiment is the ground terminal GND of the LED constant current control circuit). In practice, the jump edge detection module 11 can be provided with connection nodes as needed, as long as it is sufficient to be able to detect the jump edge of the bleed voltage $V_{bleed}$.

As shown in FIG. 3, the first logic module 14 connects the output terminals of the bleed voltage amplitude measurement module 13 and the jump edge detection module 11. When the amplitude of the bleed voltage $V_{bleed}$ is greater than the second preset value for a duration longer than a set value, it is determined that the thyristor is not connected and the second bleed turn-off signal is output. When the bleed voltage $V_{bleed}$ jumps, it is determined that the thyristor is connected and the second bleed turn-off signal is reset. Wherein, the second preset value is used to compare with the bleed voltage to determine whether the thyristor is connected. The specific value of the second preset value is set according to the actual application scenario, and in this embodiment, the second preset value is equal to the third reference voltage Ref3 after voltage division by R7, R8, and R9.

Specifically, the first logic module 14 includes a second comparator CMP2, a third comparator CMP3 and a counting unit 141.

More specifically, a first input terminal of the second comparator CMP2 is connected to an output terminal of the bleed voltage magnitude measurement module 13, and a second input terminal of the second comparator CMP2 receives the third reference voltage Ref3. The second comparator CMP2 outputs a clock signal when the bleed voltage $V_{bleed}$ is greater than a second preset value. As an example, the non-inverting input terminal of the second comparator CMP2 is connected to the connection node of the eighth resistor R8 and the ninth resistor R9, and the inverting input terminal of the second comparator CMP2 is connected to the third reference voltage Ref3, and the relationship between the input signals and the polarity of the corresponding input terminals can be adjusted by means of an inverter in actual use, without being limited by the present embodiment.

More specifically, a first input terminal of the third comparator CMP3 is connected to an output terminal of the jump edge detection module 11, and a second input terminal of the second comparator CMP2 receives a fourth reference voltage Ref4. The third comparator CMP3 outputs a reset signal when the jump voltage of the bleed voltage $V_{bleed}$ is greater than a third preset value. Wherein the third preset value is used to be compared with the bleed voltage to generate a reset signal, the specific value of the third preset value is set according to the actual application scenario, and in this embodiment, the third preset value is equal to the fourth reference voltage Ref4 after voltage division by R7, C1, and R1. As an example, the non-inverting input terminal of the third comparator CMP3 is connected to the second end of the first capacitor C1, and the inverting input terminal of the third comparator CMP3 is connected to the fourth reference voltage Ref4, and the relationship between the input signals and the polarity of the corresponding input terminals can be adjusted by means of an inverter in practice, without being limited to the present embodiment.

More specifically, the counting unit 141 is connected to the output terminals of the second comparator CMP2 and the third comparator CMP3, counts based on the clock signal and outputs the second bleed turn-off signal when the count value reaches a set value, and resets the second bleed turn-off signal based on the reset signal. In this embodiment, the output terminal of the second comparator CMP2 is connected to the clock terminal CK of the counting unit 141, and the output terminal of the third comparator CMP3 is connected to the reset terminal Reset of the counting unit 141, and the counting is carried out in the counting unit 141 when the bleed voltage $V_{bleed}$ is detected to be greater than the second preset value. After the count value reaches a set value, a high-level second bleed turn-off signal is output, the second bleed turn-off signal being used to shut down the power switch Q1. The reset signal is valid when the thyristor conducts, the count value of the counting unit 141 is cleared to zero, and the counting unit 141 is unable to output a high level second bleed turn-off signal.

As shown in FIG. 3, the second logic module 15 is connected to the output terminals of the current control module 12 and the first logic module 14, outputs a shutdown control signal when the first bleed turn-off signal or the second bleed turn-off signal is valid, and provides the shutdown control signal to the current control module 12 to shut down the bleed current.

Specifically, in this embodiment, the second logic module 15 is an OR gate, and in actual use, specific logic can be set according to the effective level of the first bleed turn-off signal and the second bleed turn-off signal, as long as it is sufficient to be able to realize the bleed turn-off function of the present disclosure, without being limited to this embodiment.

Specifically, when the first bleed turn-off signal or the second bleed turn-off signal is valid, the shutdown control signal is valid. In this embodiment, the shutdown control signal is at a high level (greater than the second reference voltage Ref2), the first operational amplifier OP1 outputs a low level drive signal, and the power switch Q1 is shut down. When both the first bleed turn-off signal and the second bleed turn-off signal are invalid, the first operational amplifier OP1 stabilizes the voltage at the inverting input terminal of the first operational amplifier OP1 at the second reference voltage Ref2 by adjusting the driving voltage of the power switch Q1, thereby obtaining the desired bleed current.

As another implementation way of the present disclosure, the bleed control circuit 1 further includes a second diode D2. The second diode D2 is connected between the output terminal of the second logic module 15 and the input terminal of the current control module 12 for isolating invalid shutdown control signals. In this embodiment, the anode of the second diode D2 is connected to the output terminal of the second logic module 15 and the cathode of the second diode D2 is connected to the first input terminal of the first operational amplifier OP1. When the shutdown control signal is invalid, the second logic module 15 outputs a low level, thereby isolating the low level signal. The second diode D2 may be omitted if the second logic module 15 output is designed to have no low level current absorption capability. It is to be noted that the specific connection relationship of the second diode D2 may be set based on the actual level and is not limited to this embodiment.

**Embodiment 3**

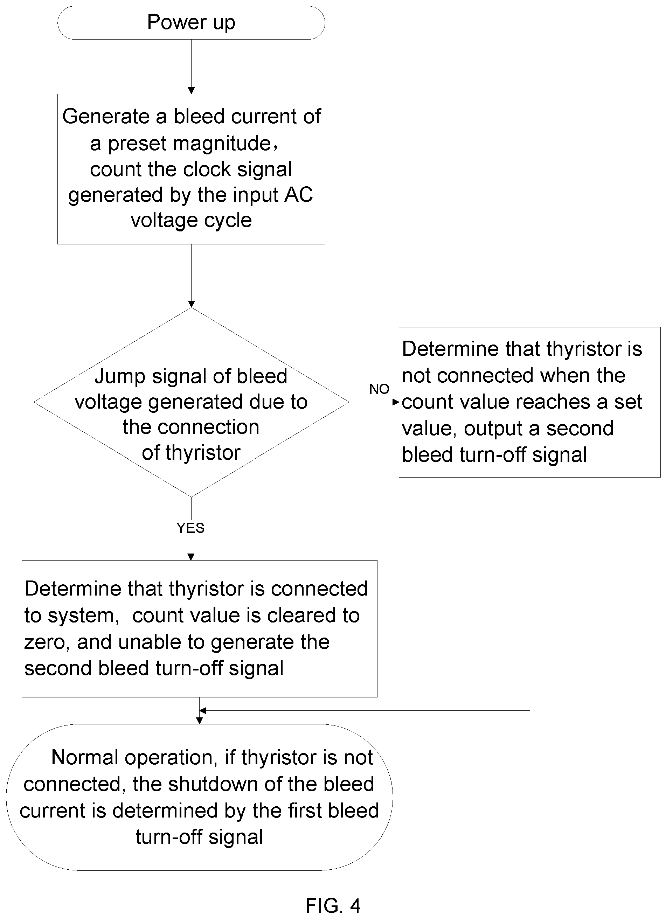

As shown in FIG. 4, the present embodiment provides a bleed current control method, which is realized based on the bleed control circuit 1 of Embodiment 2, and in practice, any hardware or software that can realize the method is applicable. The bleed current control method includes:

1) Powering up and generating a bleed current. Specifically, the circuit is powered up the power switch Q1 is in a conduction state, and a bleed current of a preset magnitude is generated. In this embodiment, the bleed current $I_{Bleed}$ satisfies the following equation:

$$ I_{Bleed} = \frac{VRef2 + Vs - K1 \cdot Vs \cdot R4}{R2} = \frac{VRef2}{R2} $$

2) Detecting the bleed voltage $V_{bleed}$, determining whether a thyristor is connected based on the bleed voltage $V_{bleed}$, outputting a second bleed turn-off signal when the thyristor is not connected, and resetting the second bleed turn-off signal when the thyristor is connected.

Specifically, because the LED conduction voltage is relatively high, so if the LED does not conduct after the thyristor is turned on, the bleed current will always exist, and the loss caused by the bleed current will be very large, which is easy to cause the chip to overheat. The present disclosure determines whether the system is connected to a thyristor or not, and if the system is not connected to a thyristor, it generates the second bleed turn-off signal to turn off the bleed current and no more bleed current flows for each subsequent line cycle to improve the efficiency of the system. If the system is connected to a thyristor, the second bleed turn-off signal is not generated and the shutdown of the bleed current is determined by the first bleed turn-off signal.

More specifically, the method of generating the second bleed turn-off signal includes: detecting a bleed voltage $V_{bleed}$, starting a counting when the bleed voltage $V_{bleed}$ is greater than a second preset value, and outputting the second bleed turn-off signal when the count value reaches a set value. As shown in FIG. 3, the seventh resistor R7, eighth resistor R8, and ninth resistor R9 are used for voltage division to detect the bleed voltage $V_{bleed}$, which is compared by the second comparator CMP2 with the third reference voltage Ref3 to produce a clock signal related to the period of the input AC voltage. The clock signal is counted in the counting unit 141. The counting unit 141 outputs a second bleed turn-off signal at a high level after the count value of the counting unit 141 reaches a set value, and the counting unit 141 outputs a high level and then stabilizes it, thereby the bleed current can be kept off to improve system efficiency until the second bleed turn-off signal is reset. Since continuous counting is required to turn off the bleed current, even occasional disturbances when the thyristor is not connected will not cause detection errors.

More specifically, the method of resetting the second bleed turn-off signal includes: detecting the bleed voltage $V_{bleed}$, generating a jump voltage of the bleed voltage $V_{bleed}$ when the thyristor conducts, and resetting the second bleed turn-off signal when the jump voltage is greater than a third preset value. As shown in FIG. 3, if the system is connected to a thyristor, at this time, the bleed voltage $V_{bleed}$ will generate a jump voltage $\Delta V$ due to the turn-on switching of the thyristor (as shown in FIG. 1), and the jump voltage $\Delta V$ is divided by the seventh resistor R7, the eighth resistor R8, and the ninth resistor R9, and then coupled to the first resistor R1 via the first capacitor C1 to generate a spike voltage (wherein the first capacitor C1 and the first resistor R1 form a differential circuit which detects the jump edge of the input voltage), which is then compared by the third comparator CMP3 with the fourth reference voltage Ref4 to produce a reset signal which clears the count value of the counting unit 141 to zero. Therefore, once the system is connected to the thyristor, the counting unit 141 will be cleared to zero for each industrial frequency cycle due to the presence of the reset signal, so that the counting unit 141 will not be able to count up to the set value, and thus will not be able to turn off the bleed current. If no jump edge is detected, no reset signal can be generated and the counting unit 141 keeps counting up to the set value, determining that the thyristor is not connected.

3) If the thyristor is connected, sampling the current flowing through the LED constant current control circuit, and outputting the first bleed turn-off signal when the current flowing through the LED constant current control circuit is greater than the first preset value.

Specifically, in this embodiment, a negative voltage detection method is used to detect the current flowing through the LED constant current control circuit, and the detected negative voltage is converted into a positive voltage VA, and then the positive voltage VA is compared with the first reference voltage Ref1. If the positive voltage VA is greater than the first reference voltage Ref1, it is determined that the current flowing through the LED constant current control circuit is greater than a first preset value, and at this time the current flowing through the LED constant current control circuit is sufficient to maintain the operation of the thyristor, therefore, the first bleed turn-off signal is output; otherwise, the first bleed turn-off signal is not output or the first bleed turn-off signal is considered invalid.

4) Outputting a shutdown control signal when the first bleed turn-off signal or the second bleed turn-off signal is valid, to shut down the bleed current.

Embodiment 4

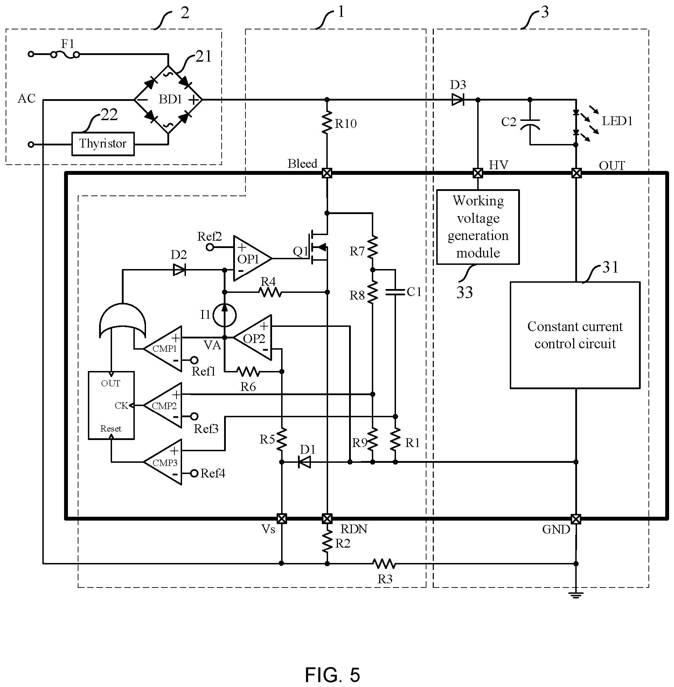

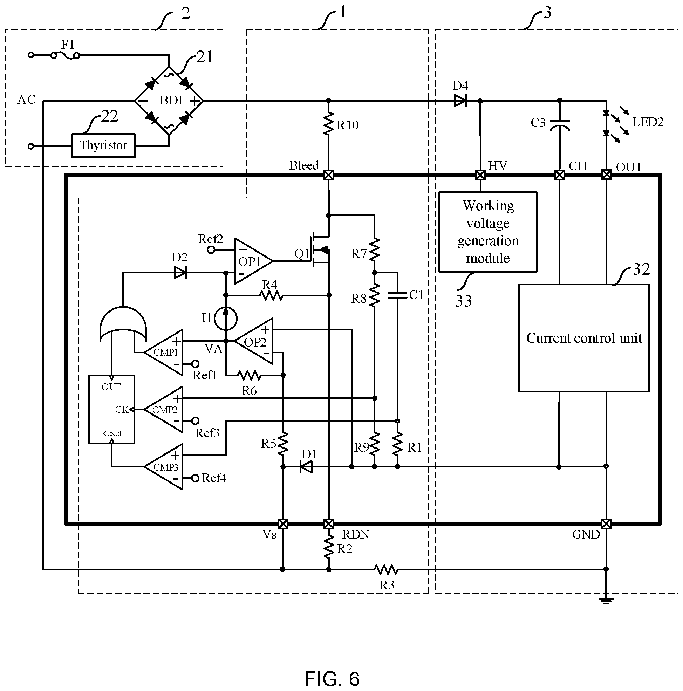

As shown in FIG. 5 and FIG. 6, the present embodiment provides a LED drive system with thyristor dimming, which includes: a bleed control circuit 1, a voltage input circuit 2, and an LED constant current control circuit 3.

As shown in FIG. 5 and FIG. 6, the voltage input module 2 receives an AC voltage AC and converts the AC voltage AC to a DC input voltage Vin.

Specifically, in this embodiment, the voltage input module 2 includes a rectifier unit 21 and a thyristor 22. The AC terminal of the rectifier unit 21 is connected to the AC voltage AC, the DC terminal of the rectifier unit 21 outputs the input voltage Vin. The thyristor 22 is connected in series to the AC terminal of the rectifier unit 21. As an alternative realization of the present disclosure, the voltage input module 2 further includes a fuse F1, the fuse F1 being connected in series to the AC terminal of the rectifier unit 21.

As shown in FIG. 5 and FIG. 6, the LED constant current control circuit 3 is connected to the output terminal of the voltage input circuit 2 to realize the constant current output of the LED based on the input voltage Vin.

Specifically, as shown in FIG. 5, as an example, the LED constant current control circuit 3 includes a third diode D3, a first LED load LED1, a second capacitor C2, and a constant current control unit 31. The anode of the third diode D3 is connected to the input voltage Vin and the cathode of the third diode D3 is connected to the positive electrode of the first LED load LED1. The second capacitor C2 is connected in parallel to both ends of the first LED load LED1. The constant current control unit 31 is connected to the negative electrode of the first LED load LED1, and performs constant current control on the current flowing through the first LED load LED1. In this example, the constant current control unit 31 includes a first power tube, a first sampling resistor and a first drive controller, wherein one end of the first power tube is connected to the negative electrode of the first LED load LED1, the other end of the first power tube is grounded via the first sampling resistor, and the first drive controller generates a drive signal for the first power tube based on the difference between the sampling signal on the first sampling resistor and the reference signal. As shown in FIG. 6, the LED constant current control circuit 3 includes a fourth diode D4, a second LED load LED2, a third capacitor C3 and a current control unit 32. The anode of the fourth diode D4 is connected to the input voltage Vin, and the cathode of the fourth diode D4 is connected to the upper plate of the third capacitor C3 and the positive electrode of the second LED load LED2. The current control unit 32 is connected to the lower plate of the third capacitor C3 and the negative electrode of the second LED load LED2 to control the charging current of the third capacitor C3 and the current flowing through the second LED load LED2, respectively, so as to realize the constant current and strobe-free control of the second LED load LED2. In this example, the current control unit 32 includes a charging current control unit and the constant current control unit of FIG. 5, and the charging current control unit includes a second power tube, a second sampling resistor, and a second drive controller, wherein one end of the second power tube is connected to the lower plate of the third capacitor C3, and the other end of the second power tube is connected to ground via the second sampling resistor, and the second drive controller generates a drive signal for the second power tube based on the sampled signals on the first sampling resistor and the second sampling resistor.

It should be noted that the bleed control circuit 1 and the LED constant current control circuit 3 (except for the capacitor and the LED load) may be integrated in the chip, wherein each resistor for regulating the current may be provided outside the chip without being limited by the illustrations of this embodiment. As shown in FIG. 5 and FIG. 6, the LED constant current control circuit 3 further includes an working voltage generation module 33, the working voltage generation module 33 being connected to the upper plate of a capacitor (second capacitor C2 or third capacitor C3) to provide an working voltage for the chip. The circuit structure of the LED constant current control circuit 3 may be set according to actual needs and is not limited to this embodiment.

As shown in FIG. 5 and FIG. 6, the bleed control circuit 1 is connected to the output terminal of the voltage input circuit 2 to provide a bleed current to maintain the conduction of the voltage input circuit 2 (the thyristor) and to turn off the bleed current in accordance with the current flowing through the LED constant current control circuit 3 and the connection state of the thyristor.

Specifically, the bleed control circuit 1 is the bleed control circuit of Embodiment 2, and the circuit structure and working principle of the bleed control circuit 1 will not be repeated herein.

In summary, the present disclosure provides a jump edge detection module, a bleed control circuit, a bleed control method, and an LED drive system, wherein the bleed control circuit includes: a current control module, a bleed voltage amplitude measurement module, a first logic module, a second logic module, and the aforementioned jump edge detection module. One end of the current control module is connected to the positive electrode of the input voltage, and the other end of the current control module is connected to the negative electrode of the input voltage for controlling the bleed current and outputting a first bleed turn-off signal when the current flowing through the LED constant current control circuit is greater than a first preset value. The bleed voltage amplitude measurement module detects the amplitude of the bleed voltage, and the jump edge detection module detects the jump edge of the bleed voltage. The first logic module is connected to the output terminals of the bleed voltage amplitude measurement module and the jump edge detection module. When the amplitude of the bleed voltage is greater than the second preset value for a duration longer than a set value, it is determined that the thyristor is not connected and the second bleed turn-off signal is output. When the bleed voltage jumps, it is determined that the thyristor is connected and the second bleed turn-off signal is reset. The second logic module is connected to the output terminals of the current control module and the first logic module to output a shutdown control signal when the first bleed turn-off signal or the second bleed turn-off signal is valid, and to provide the shutdown control signal to the current control module to shut down the bleed current. The capacitor for detecting jumps in the jump edge detection module of the present disclosure has a small capacity and can be integrated inside the chip together with the resistor, simplifying the system design. The bleed control circuit, the method and the LED drive system of the present disclosure utilize the periodic signal generated by the input AC voltage itself as a clock signal to generate a bleed turn-off signal by counting, which no longer requires filtering and timing of the industrial frequency signal, and can significantly reduce the chip area and external capacitance. By utilizing the jump in input voltage during the thyristor conduction to generate a reset signal, the count value is cleared to zero and the bleed turn-off signal cannot be output, so as to determine the connection state of the thyristor, thereby further reducing the chip area. Continuous counting is required to turn off the bleed current, so even if occasional interference occurs when the thyristor is not connected, it will not lead to detection errors and will remain stable in the state of shutting off the bleed current, with strong anti-interference capability. Therefore, the present disclosure effectively overcomes various shortcomings in the traditional technology and has high industrial utilization value.

The above-mentioned embodiments are merely illustrative of the principle and effects of the present disclosure instead of limiting the present disclosure. Modifications or variations of the above-described embodiments may be made by those skilled in the art without departing from the spirit and scope of the disclosure. Therefore, all equivalent modifications or changes made by those who have common knowledge in the art without departing from the spirit and technical concept disclosed by the present disclosure shall be still covered by the claims of the present disclosure.

## Claims

1. A jump edge detection module, comprising a first capacitor and a first resistor; wherein

   a first end of the first capacitor is connected to a voltage to be measured, and a second end of the first capacitor is connected to a first end of the first resistor;
   a second end of the first resistor is grounded;
   a connection node between the first capacitor and the first resistor is configured to output a jump edge detection signal of the voltage to be measured.

2. The jump edge detection module according to claim 1, wherein the voltage to be measured is a bleed voltage or a sampling voltage of the bleed voltage.

3. A bleed control circuit for maintaining thyristor conduction, wherein the bleed control circuit comprises at least a current control module, a bleed voltage amplitude measurement module, a first logic module, a second logic module, and a jump edge detection module according to claim 2; wherein

   one end of the current control module is connected to a positive electrode of an input voltage, and the other end of the current control module is connected to a negative electrode of the input voltage, for controlling a bleed current and outputting a first bleed turn-off signal when the current flowing through an LED constant current control circuit is greater than a first preset value;
   the bleed voltage amplitude measurement module is configured to detect an amplitude of the bleed voltage, and the jump edge detection module is configured to detect a jump edge of the bleed voltage;
   the first logic module is connected to an output terminal of the bleed voltage amplitude measurement module and an output terminal of the jump edge detection module; when the amplitude of the bleed voltage is greater than a second preset value for a duration longer than a set value, it is determined that the thyristor is not connected and a second bleed turn-off signal is output; when the bleed voltage jumps, it is determined that the thyristor is connected and the second bleed turn-off signal should be reset; and
   the second logic module is connected to an output terminal of the current control module and an output terminal of the first logic module, to output a shutdown control signal when the first bleed turn-off signal or the second bleed turn-off signal is valid, and to provide the shutdown control signal to the current control module to shut down the bleed current.

4. The bleed control circuit according to claim 3, wherein the current control module comprises a power switch, a second resistor, a third resistor, a fourth resistor, a voltage conversion unit, a first comparator, a constant current source and a first operational amplifier; wherein

   a first end of the power switch is connected to the positive electrode of the input voltage and a second end of the power switch is connected to the negative electrode of the input voltage via the second resistor;

a first end of the third resistor is connected to a ground terminal of the LED constant current control circuit and a second end of the third resistor is connected to the negative electrode of the input voltage;

an input terminal of the voltage conversion unit is connected to the second end of the third resistor, to convert the negative voltage at the second end of the third resistor into a positive voltage;

a first input terminal of the first comparator is connected to an output terminal of the voltage conversion unit, a second input terminal of the first comparator is configured to receive a first reference voltage, and the first comparator is configured to output the first bleed turn-off signal;

an input terminal of the constant current source is connected to an output terminal of the voltage conversion unit, and an output terminal of the constant current source is connected to the first input terminal of the first operational amplifier;

one end of the fourth resistor is connected to an output terminal of the constant current source and the other end of the fourth resistor is connected to the second end of the power switch; and

a first input terminal of the first operational amplifier is connected to an output terminal of the second logic module, and a second input terminal of the first operational amplifier is configured to receive a second reference voltage, and the first operational amplifier is configured to drive the power switch to adjust the bleed current based on a difference between an output voltage of the constant current source and the second reference voltage, and turns off the power switch based on the shutdown control signal.

5. The bleed control circuit according to claim 4, wherein the voltage conversion unit comprises a fifth resistor, a sixth resistor, a first diode and a second operational amplifier;

the fifth resistor and the sixth resistor are connected in series between the input terminal and the output terminal of the voltage conversion unit;

the cathode of the first diode is connected to the input terminal of the voltage conversion unit and the anode is connected to the ground terminal of the LED constant current control circuit;

a first input terminal of the second operational amplifier is connected between the fifth resistor and the sixth resistor, a second input terminal is connected to the anode of the first diode, and an output is connected to the output terminal of the voltage conversion unit.

6. The bleed control circuit according to claim 3, wherein the bleed control circuit further comprises a second diode; wherein the second diode is connected between an output terminal of the second logic module and an input terminal of the current control module, for isolating an invalid shutdown control signal.

7. The bleed control circuit according to claim 3, wherein the bleed voltage amplitude measurement module comprises a seventh resistor, an eighth resistor and a ninth resistor; wherein the seventh resistor, the eighth resistor and the ninth resistor are sequentially connected in series between both ends of the bleed voltage; wherein a connection node of the eighth resistor and the ninth resistor is configured to output an amplitude detection signal.

8. The bleed control circuit according to claim 7, wherein the first end of the first capacitor in the jump edge detection module is connected to a connection node of the seventh resistor and the eighth resistor.

9. The bleed control circuit according to any one of claims 3-8, wherein the first logic module comprises a second comparator, a third comparator and a counting unit; wherein

a first input terminal of the second comparator is connected to an output terminal of the bleed voltage amplitude measurement module, and a second input terminal of the second comparator is configured to receive a third reference voltage, wherein the second comparator outputs a clock signal when the bleed voltage is greater than a second preset value;

a first input terminal of the third comparator is connected to an output terminal of the jump edge detection module, and a second input terminal of the third comparator is configured to receive a fourth reference voltage, wherein the third comparator outputs a reset signal when a jump voltage of the bleed voltage is greater than a third preset value; and

the counting unit is connected to an output terminal of the second comparator and an output terminal of the third comparator, wherein the counting unit performs counting based on the clock signal and outputs the second bleed turn-off signal when a count value reaches a set value, and resets the second bleed turn-off signal based on the reset signal.

10. A LED drive system with thyristor dimming, wherein the LED drive system with thyristor dimming comprises at least a voltage input circuit, an LED constant current control circuit, and bleed control circuit according to any one of claims 3-9; wherein

the voltage input circuit is configured to receive an AC voltage and convert the AC voltage to an input voltage of DC;
the LED constant current control circuit is connected to an output terminal of the voltage input circuit to achieve constant current output of an LED based on the input voltage; and
the bleed control circuit is connected to the output terminal of the voltage input circuit to provide a bleed current to maintain the conduction of the voltage input circuit and to turn off the bleed current in accordance with the current flowing through the LED constant current control circuit and a connection state of the thyristor.

11. The LED drive system with thyristor dimming according to claim 10, wherein the voltage input circuit comprises a rectifier unit and a thyristor; an AC terminal of the rectifier unit is connected to the AC voltage, a DC terminal of the rectifier unit is configured to output the input voltage; and the thyristor is connected in series to the AC terminal of the rectifier unit.

12. The LED drive system with thyristor dimming according to claim 10 or 11, wherein the LED constant current control circuit comprises a third diode, a first LED load, a second capacitor and a constant current control unit; wherein

an anode of the third diode is connected to the input voltage, and a cathode of the third diode is connected to a positive electrode of the first LED load; the second capacitor is connected in parallel to both ends of the first LED load; and
the constant current control unit is connected to a negative electrode of the first LED load, and performs constant current control on the current flowing through the first LED load.

13. The LED drive system with thyristor dimming according to claim 10 or 11, wherein the LED constant current control circuit comprises a fourth diode, a second LED load, a third capacitor and a current control unit; wherein

an anode of the fourth diode is connected to the input voltage and a cathode of the fourth diode is connected to an upper plate of the third capacitor and a positive electrode of the second LED load;
the current control unit is connected to a lower plate of the third capacitor and a negative electrode of the second LED load, to control the charging current of the third capacitor and the current flowing through the second LED load respectively, to realize the constant current and strobe-free control of the second LED load.

14. A bleed current control method, realized based on a bleed control circuit according to any one of claims 3-9, wherein the bleed current control method comprises at least:

powering up and generating a bleed current;
detecting a bleed voltage, determining whether a thyristor is connected based on the bleed voltage, outputting a second bleed turn-off signal when the thyristor is not connected, and resetting the second bleed turn-off signal when the thyristor is connected;
if the thyristor is connected, sampling the current flowing through the LED constant current control circuit; and when the current flowing through the LED constant current control circuit is greater than a first preset value, outputting a first bleed turn-off signal; and
outputting a shutdown control signal to shut down the bleed current when the first bleed turn-off signal or the second bleed turn-off signal is valid.

15. The bleed current control method according to claim 14, wherein a method of generating the second bleed turn-off signal comprises: detecting the bleed voltage, starting counting when the bleed voltage is greater than a second preset value, and outputting the second bleed turn-off signal when a count value reaches a set value; and/or, a method of resetting the second bleed turn-off signal comprises: detecting the bleed voltage, generating a jump voltage from the bleed voltage when the thyristor conducts, and resetting the second bleed turn-off signal when the jump voltage is greater than a third preset value.

FIG. 1

FIG. 2

FIG. 3

Power up

Generate a bleed current of
a preset magnitude，
count the clock signal
generated by the input AC
voltage cycle

Jump signal of bleed
voltage generated due to
the connection
of thyristor

NO → Determine that thyristor is
not connected when the
count value reaches a set
value, output a second
bleed turn-off signal

YES

Determine that thyristor is connected
to system， count value is cleared to
zero, and unable to generate the
second bleed turn-off signal

Normal operation, if thyristor is not
connected, the shutdown of the bleed
current is determined by the first bleed
turn-off signal

FIG. 4

FIG. 5

FIG. 6

## INTERNATIONAL SEARCH REPORT

| International application No. |
|---|
| **PCT/CN2023/080467** |

**A.    CLASSIFICATION OF SUBJECT MATTER**

H02H9/02(2006.01)i

According to International Patent Classification (IPC) or to both national classification and IPC

**B.    FIELDS SEARCHED**

Minimum documentation searched (classification system followed by classification symbols)

IPC：H02H

Documentation searched other than minimum documentation to the extent that such documents are included in the fields searched

Electronic data base consulted during the international search (name of data base and, where practicable, search terms used)

WPABS; DWPI; CNABS; CNTXT; CNKI; EPTXT; USTXT; WOTXT: 电容, 电阻, 峰值, 幅值, 泄放, 检测, 跳变, 突变, 可控硅, LED, capacity, resistance, amplitude, jump, bleed, silicon

**C.    DOCUMENTS CONSIDERED TO BE RELEVANT**

| Category* | Citation of document, with indication, where appropriate, of the relevant passages | Relevant to claim No. |
|---|---|---|
| X | JP 2005285601 A (MATSUSHITA ELECTRIC INDUSTRIAL CO., LTD.) 13 October 2005 (2005-10-13) description, paragraphs [0004]-[0024], figures 1-4, and abstract | 1, 2 |
| A | JP 2005285601 A (MATSUSHITA ELECTRIC INDUSTRIAL CO., LTD.) 13 October 2005 (2005-10-13) description, paragraphs [0004]-[0024], figures 1-4, and abstract | 3-15 |
| X | CN 110109501 A (SHENZHEN THINKPLUS SEMICONDUCTOR CO., LTD.) 09 August 2019 (2019-08-09) description, paragraphs [0030]-[0038], and figures 1 and 2 | 1, 2 |
| A | CN 110109501 A (SHENZHEN THINKPLUS SEMICONDUCTOR CO., LTD.) 09 August 2019 (2019-08-09) description, paragraphs [0030]-[0038], and figures 1 and 2 | 3-15 |
| A | CN 110198580 A (MAXIC TECHNOLOGY, INC.) 03 September 2019 (2019-09-03) entire document | 1-15 |

☑ Further documents are listed in the continuation of Box C.     ☑ See patent family annex.

| * Special categories of cited documents: | |
|---|---|
| "A"  document defining the general state of the art which is not considered to be of particular relevance | "T"  later document published after the international filing date or priority date and not in conflict with the application but cited to understand the principle or theory underlying the invention |
| "D"  document cited by the applicant in the international application | "X"  document of particular relevance; the claimed invention cannot be considered novel or cannot be considered to involve an inventive step when the document is taken alone |
| "E"  earlier application or patent but published on or after the international filing date | |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **13 April 2023** | **28 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT

| International application No. |
|---|
| **PCT/CN2023/080467** |

**C. DOCUMENTS CONSIDERED TO BE RELEVANT**

| Category* | Citation of document, with indication, where appropriate, of the relevant passages | Relevant to claim No. |
|---|---|---|
| A | CN 106912144 A (SILERGY SEMICONDUCTOR TECHNOLOGY (HANGZHOU) LTD.) 30 June 2017 (2017-06-30) entire document | 1-15 |

Form PCT/ISA/210 (second sheet) (July 2022)

**INTERNATIONAL SEARCH REPORT**
**Information on patent family members**

International application No.

**PCT/CN2023/080467**

| Patent document cited in search report | | | Publication date (day/month/year) | Patent family member(s) | | | Publication date (day/month/year) |
|---|---|---|---|---|---|---|---|
| JP | 2005285601 | A | 13 October 2005 | JP | 4114625 | B2 | 09 July 2008 |
| CN | 110109501 | A | 09 August 2019 | CN | 209674262 | U | 22 November 2019 |
| | | | | CN | 110109501 | B | 06 April 2021 |
| CN | 110198580 | A | 03 September 2019 | CN | 110198580 | B | 27 April 2021 |
| CN | 106912144 | A | 30 June 2017 | US | 2019313498 | A1 | 10 October 2019 |
| | | | | US | 10887957 | B2 | 05 January 2021 |
| | | | | US | 2018295690 | A1 | 11 October 2018 |
| | | | | US | 10356864 | B2 | 16 July 2019 |
| | | | | CN | 106912144 | B | 23 January 2018 |

Form PCT/ISA/210 (patent family annex) (July 2022)

## EP 4 492 602 A1

**Patent documents cited in the description**

- CN 202210664617